# FASCICULE DE BREVET EUROPEEN

(11) **EP 2 283 561 B1**
(45) Date de publication et mention de la délivrance du brevet: **12.06.2019**
(21) Numéro de dépôt: 09772679.8
(22) Date de dépôt: 26.05.2009
(51) Int. Cl.: H02K 1/22, H02K 21/04

(54) **ROTOR DE MACHINE ELECTRIQUE TOURNANTE AVEC STRUCTURES INTERPOLAIRES A MASSE REDUITE**
ROTOR FÜR ELEKTRISCHE DREHMASCHINE MIT INTERPOLAREN STRUKTUREN MIT VERRINGERTER MASSE
ROTOR FOR ROTARY ELECTRIC MACHINE WITH REDUCED-MASS INTERPOLAR STRUCTURES

(30) Priorité: 06.06.2008 FR 0853755; 06.06.2008 FR 0853745
(43) Date de publication de la demande: 16.02.2011
(73) Titulaire: Valeo Equipements Electriques Moteur, 94046 Créteil Cedex (FR)
(72) Inventeur: MASFARAUD, Julien, F-75010 Paris (FR)
(74) Mandataire: de Lambilly Delorme, Marie Pierre
(86) Numéro de dépôt international: PCT/FR2009/050977
(87) Numéro de publication internationale: WO 2010/000996

(56) Documents cités:
- FR-A- 2 895 165
- FR-A1- 2 770 347
- FR-A1- 2 865 322
- GB-A- 2 308 017
- JP-A- 60 148 363
- JP-A- 2006 074 969
- US-A- 5 306 977
- US-A- 5 483 116
- US-A- 5 747 913
- US-A- 5 973 435
- US-A- 6 013 967
- US-A1- 2006 284 580

## Description

La présente invention concerne de manière générale les machines électriques tournantes.

Plus particulièrement, l'invention concerne des machines électriques tournantes de type alternateur ou alterno-démarreur, destinées aux véhicules automobiles.

Et plus particulièrement encore, l'invention concerne les machines électriques tournantes dont le rotor comporte un ou plusieurs bobinages d'excitation, des pôles magnétiques, et des aimants permanents disposés entre les pôles magnétiques. Du fait de cette disposition, ces aimants sont appelés aimants interpolaires.

Typiquement, le rotor a une structure à griffes. Une telle structure est constituée de deux roues polaires, opposées et imbriquées, chacune comprenant des griffes. Chaque griffe d'une roue polaire s'étend en direction de l'autre roue polaire. De plus, chaque griffe s'insère entre deux griffes consécutives de la roue polaire opposée. En outre, le rotor comporte des parties aimantées, et le bobinage d'excitation est enroulé autour de l'arbre de rotation de la machine.

Le rotor est agencé au sein d'un stator. Lorsque la machine tournante est en fonctionnement, le rotor tourne autour de son axe, et un flux magnétique circule entre les pôles magnétiques adjacents, de polarités respectives opposées, en passant par les enroulements du stator. Les aimants disposés entre les pôles magnétiques, constitués par les griffes, servent à empêcher le flux magnétique de passer directement d'un pôle à l'autre sans passer par le stator.

Cette fuite de flux d'un pôle à l'autre sans passer par le stator affecte en effet le rendement, et pénalise les performances en puissance de la machine électrique tournante. En effet, le flux passant directement d'une griffe à l'autre sans passer par le stator ne participe pas au fonctionnement de la machine. L'utilisation des aimants interpolaires permet de limiter ces fuites.

On connait des aimants interpolaires de forme globalement parallélépipédique. Chacun est placé entre deux griffes adjacentes du rotor, appartenant chacune, respectivement, à l'une des deux roues polaires. Ces aimants interpolaires sont maintenus soit par des agrafes, soit grâce à deux rainures (ou épaulements) chacune réalisée sur un des bords latéraux opposés des griffes entre lesquelles l'aimant est situé.

Dans le premier cas, les aimants peuvent être de taille réduite mais ils ont tendance à bouger à cause de la force centrifuge, car les agrafes ne garantissent pas une fixation optimum.

Dans le deuxième cas, les aimants doivent avoir un volume suffisant pour remplir tout l'espace interpolaire, et ils peuvent être usinés pour présenter une nervure destinée à coopérer avec la rainure des griffes polaires. Cela augmente le coût de la machine, car ces aimants sont chers.

Le document US5483116 A décrit un rotor à griffe comprenant entre chaque griffe des aimants et au moins un organe de maintien d'aimants.

Le document JP2006074969 décrit un rotor à griffe comprenant des aimants entre les griffes.

Dans les applications où la machine électrique tournante doit fournir une puissance volumique importante, l'utilisation de ces aimants en grand nombre est indispensable.

En raison du coût de la matière première dans laquelle ils sont réalisés, par exemple des terres rares ou de la ferrite, ces aimants interpolaires représentent une partie substantielle du coût du rotor. Par conséquent, il convient d'optimiser leur conception. Notamment, il convient d'optimiser leur forme géométrique afin de s'assurer que l'ensemble de la masse de l'aimant est utile à ses fonctions tout en garantissant une bonne tenue mécanique.

Le but de l'invention est de proposer un rotor avec des ensembles magnétiques interpolaires comportant des aimants, qui sont à la fois de taille réduite et fixés, tout en garantissant une bonne tenue mécanique, dans des rainures (ou épaulements) latérales des griffes polaires.

Le rotor selon l'invention, est un rotor de machine électrique tournante, agencé de manière à pouvoir entrer en rotation autour d'un axe, et autour duquel peut être agencé un stator. Ce rotor comporte deux roues polaires ayant chacune une série de griffes polaires s'étendant suivant une direction axiale. Ces griffes ont une section dans un plan qui est perpendiculaire à l'axe sensiblement trapézoïdale et s'étendent depuis une extrémité radiale externe de la roue polaire, en direction de l'autre roue polaire. Les roues polaires sont agencées de manière que chaque griffe d'une roue polaire est située entre deux griffes polaires consécutives de l'autre roue polaire. Le rotor comporte en outre des ensembles magnétiques respectivement agencés dans les espaces interpolaires, et qui comportent chacun au moins un aimant. Le rotor a dans un plan de coupe radial, une première surface totale d'aimant d'une section de l'ensemble magnétique, qui est inférieure à une seconde surface définie par le produit de la hauteur radiale d'une face de l'ensemble magnétique tournée vers la griffe polaire par la distance circonférentielle entre les griffes polaires dans l'espace interpolaire. Il est caractérisé en ce que l'ensemble magnétique comporte une succession de plusieurs couches d'aimant et de plusieurs couches de matière magnétique alternées, superposées selon une direction radiale. L'aimant peut présenter un premier évidement s'étendant selon une direction axiale.

Ainsi, il est possible de réduire la masse d'aimant nécessaire pour limiter les fuites de flux magnétique entre les griffes polaires. En effet, tout en conservant des dimensions de l'ensemble magnétique permettant un bon contact avec les griffes, on supprime du volume d'aimant qui serait inutile. On peut alors assurer les mêmes fonctions avec une masse réduite d'aimant.

L'aimant peut comporter une saillie qui s'étend radialement dans l'espace interpolaire au-delà de la rainure vers une extrémité radiale externe du rotor, sans dépasser le niveau radial de la face externe des griffes polaires. La réalisation des rainures (ou épaulements) implique qu'une partie de la griffe sur laquelle elle est réalisée, se trouve en regard direct avec la griffe adjacente sans voir l'aimant. Cette partie est la partie radiale externe de la griffe, et est communément appelée « lèvre ». Malgré la présence d'aimants interpolaires, il subsiste des fuites de flux magnétique entre les lèvres respectives de deux griffes adjacentes du rotor. Ainsi, l'ensemble magnétique présente un obstacle magnétique au passage direct d'un flux magnétique entre les lèvres formées par les rainures de deux griffes adjacentes du rotor, c'est-à-dire, sans passer par le stator. La saillie repousse le flux magnétique en direction du stator. Cela permet de faire participer ce flux au flux induit dans les enroulements du stator de la machine électrique tournante, et par conséquent améliore son rendement.

L'aimant peut avoir une largeur circonférentielle comprise entre 18 et 22 fois la distance radiale entre une extrémité radiale externe des griffes du rotor et une extrémité radiale interne du stator. Par exemple, pour une distance radiale entre une extrémité radiale externe des griffes du rotor et une extrémité radiale interne du stator de 0,325mm, la largeur de l'aimant est préférentiellement comprise entre 5,85 et 7,15mm.

Par exemple, on peut prévoir un aimant avec une largeur circonférentielle de 20 fois la distance radiale entre une extrémité externe des griffes du rotor et une extrémité interne du stator. Soit une largeur de 6,5mm, lorsque la distance radiale entre une extrémité externe des griffes du rotor et une extrémité interne du stator est de 0,325mm.

L'aimant peut être en matière terres rares. Par exemple, de tels aimants peuvent être en Néodyme Fer Bore (NeFeB), ou en ferrite.

Dans le rotor, l'ensemble magnétique peut comporter, en outre de l'aimant, un élément de matière magnétique.

Cet élément, placé dans la périphérie radiale externe de l'ensemble magnétique, permet notamment d'empêcher l'aimant de s'échapper par centrifugation, lorsque le rotor est en rotation.

Dans des modes de réalisation, l'élément de matière magnétique est en acier. En particulier, cet acier peut être de l'acier doux.

Ainsi, l'élément de matière magnétique offre une bonne conduction du flux magnétique de l'aimant. Cela permet de renforcer mécaniquement la structure, sans restreindre ses fonctions magnétiques de limitation des fuites de flux magnétique de la machine.

En outre, on peut prévoir un élément de matière magnétique en forme lame de faible épaisseur radiale, agencé entre deux aimants.

Ainsi, l'élément de matière magnétique est facilement saturé par l'aimant, et les lignes de champ magnétique issues de l'aimant ne risquent pas de se trouver confinées dans le volume de l'élément magnétique.

L'aimant peut présenter un premier évidement selon une longueur axiale, et cet évidement est dirigé radialement vers l'intérieur du rotor.

L'aimant peut avoir un deuxième évidement toujours selon une longueur axiale, mais cette fois, ce deuxième évidement est dirigé radialement vers l'extérieur du rotor.

Cela permet de réduire la masse d'aimant tout en conservant une surface de contact plane importante avec les griffes polaires.

Dans un exemple utile à la compréhension de l'invention, dans le plan de coupe radial, l'aimant peut avoir un profil qui la forme de la lettre U.

Dans cet exemple, l'aimant peut recouvrir l'élément qui peut être soit magnétique, soit en matériau non magnétique comme par exemple du plastique, voire de l'air. Ainsi, les griffes sont en contact direct avec l'aimant.

Dans cet exemple utile à la compréhension de l'invention, l'aimant peut aussi avoir un profil dans le plan de coupe radial qui la forme de la lettre O. Ainsi l'élément, magnétique ou non, est logé au milieu du O et la masse d'aimant est répartie de manière homogène au sein de l'ensemble magnétique.

Dans le mode de réalisation selon l'invention, dans un plan de coupe radial, l'ensemble magnétique comporte une succession de plusieurs couches d'aimant et de plusieurs couches de matière magnétique alternées, superposées selon une direction radiale.

Dans ce mode de réalisation, la masse d'aimant est réduite en utilisant des éléments à géométrie simple.

Dans un exemple utile à la compréhension de l'invention, l'ensemble magnétique est composé de deux aimants. Un premier aimant a globalement la forme d'un parallélépipède. Le deuxième aimant a globalement la forme d'un parallélépipède dont une face tournée vers l'extérieur porte une saillie sur toute sa longueur axiale. L'aimant qui porte la saillie est en contact, par sa face opposée à la saillie, donc sa face tournée vers l'intérieur, avec l'autre aimant. L'ensemble magnétique est inséré dans l'espace interpolaire en sorte que la saillie s'étend selon une direction radiale externe du rotor et en direction de son extrémité radiale, dans l'extrémité de l'espace interpolaire. Le deuxième aimant qui a globalement la forme d'un parallélépipède dont une face porte la saillie sur toute sa longueur axiale est en matière ferrites, le premier étant en matière terres rares.

Cela permet, en outre de renforcer la fonction de réduction des fuites de flux magnétique de l'ensemble magnétique, de limiter l'augmentation de son coût par rapport à un aimant interpolaire de l'art antérieur, en réalisant l'aimant qui porte la saillie dans une matière moins onéreuse que la matière utilisée pour l'autre aimant. En effet, la réalisation de la saillie peut engendrer des pertes de matière. Ces pertes sont moins coûteuses si l'aimant est réalisé dans une matière peu onéreuse. De plus, le coût de fabrication lié à l'usinage peut être réduit.

Dans un autre exemple utile à la compréhension de l'invention, l'ensemble magnétique est composé de deux aimants et d'un élément de matière magnétique. L'élément de matière magnétique a la forme d'une lame fine qui est disposée entre les deux aimants.

Ainsi, la tenue mécanique de l'ensemble magnétique est renforcée. Les avantages de la faible épaisseur radiale de la lame, sont les mêmes que ceux déjà mentionnés plus haut.

Le rotor selon l'invention peut être utilisé dans un alternateur ou un alterno-démarreur.

L'invention sera mieux comprise à la lecture de la description qui va suivre, donnée uniquement à titre d'exemple, et faite en se référant aux dessins annexés dans lesquels :
- la figure 1 est une vue selon un plan de coupe longitudinal du rotor selon l'invention,
- la figure 2 est une vue en perspective de deux griffes consécutives d'une roue polaire avec une paire d'ensembles magnétiques selon l'invention,
- la figure 3 est une vue en perspective d'une griffe d'une première roue polaire imbriquée entre deux griffes consécutives d'une deuxième roue polaire avec une paire d'ensembles magnétiques selon l'invention,
- la figure 4 est une vue selon un plan de coupe radial d'un exemple d'ensemble magnétique du rotor utile à la compréhension de l'invention,
- la figure 5 est une vue selon un plan de coupe radial d'un exemple d'ensemble magnétique du rotor utile à la compréhension de l'invention,
- la figure 6 est une vue selon un plan de coupe radial d'un exemple d'ensemble magnétique du rotor utile à la compréhension de l'invention,
- la figure 7 est une vue selon un plan de coupe radial d'un exemple d'ensemble magnétique du rotor utile à la compréhension de l'invention,
- la figure 8 est une vue selon un plan de coupe radial d'un ensemble magnétique du rotor selon un troisième mode de réalisation.
- la figure 9 est une vue en perspective de deux griffes consécutives d'une roue polaire selon une variante de l'invention,
- la figure 10 est une vue en perspective d'une griffe d'une première roue polaire imbriquée entre deux griffes consécutives d'une deuxième roue polaire selon une variante de l'invention,
- la figure 11 est une vue selon un plan de coupe radial d'un exemple d'ensemble magnétique du rotor utile à la compréhension de l'invention,
- la figure 12 est une vue en perspective d'un exemple d'aimant de la figure 11 utile à la compréhension de l'invention,
- la figure 13 est une vue selon un plan de coupe radial d'un autre exemple d'ensemble magnétique du rotor utile à la compréhension de l'invention,
- la figure 14 est une vue selon un plan de coupe radial d'un exemple d'ensemble magnétique du rotor utile à la compréhension de l'invention.

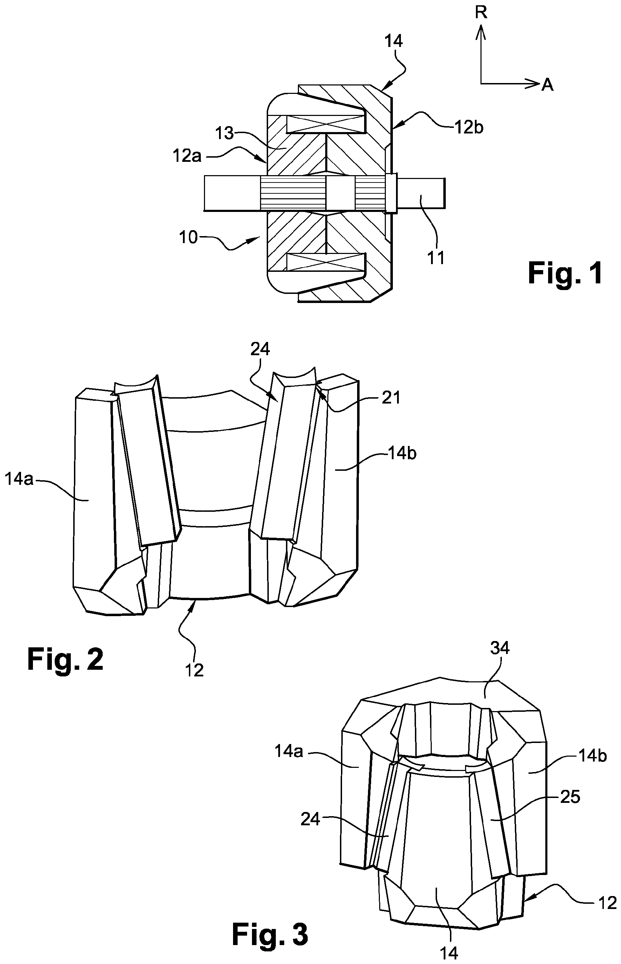

Le rotor selon l'invention comprend au moins un axe de symétrie. Cet axe correspond à l'axe de rotation du rotor. Dans la présente description, on dénomme ainsi « direction axiale » et « direction radiale », des directions telles qu'indiquées par les flèches "A" et "R", respectivement, de la figure 1.

On dénomme également élément intérieur, un élément qui se trouve du côté de l'axe. On dénomme également élément extérieur, un élément qui se trouve d'un côté opposé à l'axe.

La figure 1 représente un rotor 10 d'une machine électrique tournante connue, tel qu'un alternateur du type polyphasé, pour véhicule automobile à moteur thermique. Bien entendu, l'alternateur peut aussi être réversible, et consister en un alterno-démarreur, pouvant fonctionner en mode alternateur ou en mode moteur électrique, notamment pour démarrer le moteur thermique du véhicule.

Cette machine comporte un rotor 10 solidaire en rotation d'un arbre central 11, appelé arbre de rotor, et un stator (non représenté) qui entoure le rotor. Dans l'exemple représenté, le rotor 10 est réalisé sous forme d'un rotor à griffes comprenant deux roues polaires 12a, 12b, ici axialement juxtaposées. Chaque roue présente un flasque transversal 13 de forme annulaire. Ce flasque transversal est pourvu, à sa périphérie extérieure, de griffes polaires 14 s'étendant sensiblement axialement.

Un entrefer annulaire existe entre la face périphérique extérieure des griffes polaires 14 et la périphérie intérieure du corps du stator. Il correspond à la distance radiale en entre une extrémité externe des griffes polaires et une extrémité interne du stator.

Les griffes 14 ont une section transversale, c'est-à-dire dans un plan de coupe perpendiculaire à l'axe du rotor, qui est de forme globalement trapézoïdale ou triangulaire. Les griffes de chacune des roues polaires 12a, 12b sont dirigées axialement vers le flasque 13 de l'autre roue polaire 12a, 12b. En outre, la griffe 14 d'une roue polaire 12a, 12b pénètre dans l'espace existant entre deux griffes 14 adjacentes de l'autre roue polaire 12a, 12b. Ainsi, les griffes 14 des roues polaires 12a, 12b sont imbriquées.

Sur la figure 2, on peut voir des rainures (ou épaulements) axiales 21 réalisées sur les faces latérales des griffes 14 du rotor 10. Ces griffes appartiennent à une même roue polaire 12. Un ensemble magnétique 24 est inséré dans ces rainures (ou épaulements) de sorte à être en contact, à la fois avec une griffe 14 d'une roue polaire, et avec une autre griffe imbriquée d'une autre roue polaire (non représentée).

Ces rainures 21 sont réalisées de façon classique avec une fraise. Par exemple, pour un entrefer de 0,325 mm la largeur circonférentielle de l'ensemble magnétique 24 est de 6,5 mm. Ainsi, dans cet exemple la largeur de la tête de la fraise est alors de 6,5 mm.

Sur la figure 3, on peut voir une griffe 14 d'une roue polaire 13, du rotor 10, imbriquée entre deux griffes 14a, 14b d'une roue polaire 12. Des ensembles magnétiques 24, 25 sont insérés dans les espaces interpolaires.

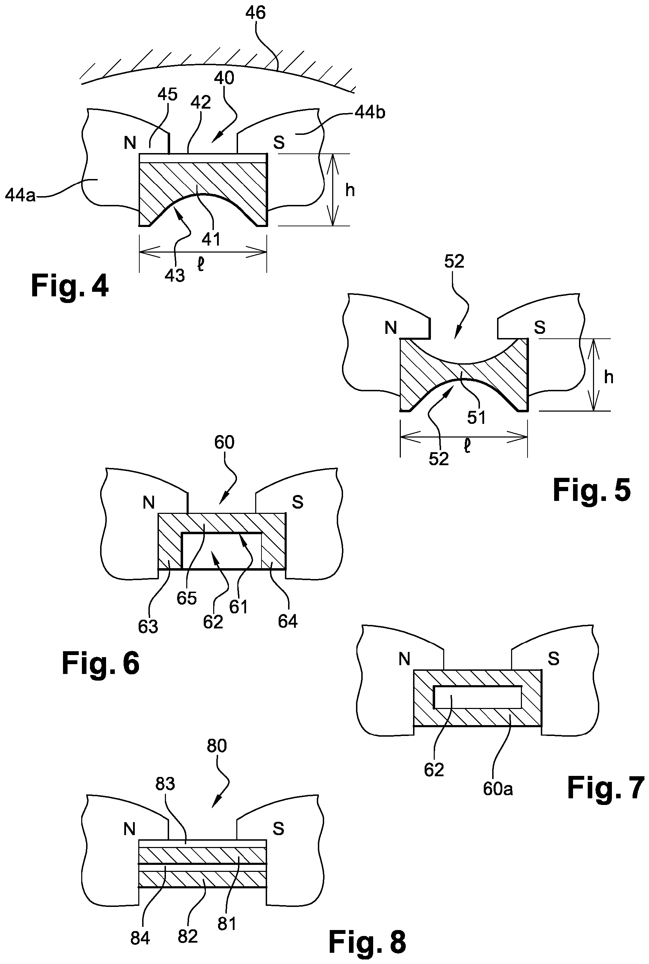

Dans un exemple utile à la compréhension de l'invention présenté à la figure 4, l'ensemble magnétique 40 est composé à la fois d'un aimant 41 et d'un élément de matière magnétique 42.

L'aimant 41 est de manière préférentielle en matière terres rares. Par exemple, il peut être obtenu par moulage ou encore par façonnage d'un bloc de base (par exemple par fraisage). En référence à son implantation dans les espaces interpolaires du rotor, l'aimant 41 a une base en forme de parallélépipède de longueur axiale L (non représentée), de largeur circonférentielle l, et de hauteur radiale h.

Dans cet exemple, sur une face de dimensions L et l, l'aimant est évidé suivant toute la longueur axiale, d'un bout à l'autre.

Cet évidement 43, peut avoir, dans un plan de coupe radial, un profil semi-circulaire, elliptique, triangulaire ou avoir une autre forme. Cet évidement peut être centré par rapport à la face sur laquelle il est réalisé ou alors avoir une autre position. Il peut également y avoir un ou plusieurs évidements sur la même face. La forme et les dimensions de cet évidement dépendent notamment des dimensions de l'aimant, et/ou des propriétés mécaniques de la matière dans laquelle est fabriqué l'aimant. Par exemple, plus l'aimant est petit plus on veillera à ne pas réaliser un évidement trop important. En effet, il en résulterait une faiblesse mécanique au niveau de la face opposée à l'évidement.

L'aimant représenté sur la figure 4 a un creux semi-elliptique. Le grand axe de l'ellipse étant égal à la largeur circonférentielle l. Cependant, on pourrait prendre un grand axe de dimension plus petite ou plus grande.

La largeur circonférentielle l de l'aimant est comprise entre 18 et 22 fois la dimension de l'entrefer de la machine électrique tournante. De manière préférentielle elle vaut 20 fois la dimension de l'entrefer.

L'élément magnétique 42 est en forme de lame de faible épaisseur radiale. L'élément magnétique est par exemple en acier. Son épaisseur radiale est assez petite pour qu'il soit saturé en flux magnétique par l'aimant 41. Ainsi, on évite de court-circuiter l'aimant 41.

L'aimant 41 et l'élément magnétique 42 sont maintenus l'un à l'autre par aimantation.

L'ensemble magnétique 40 est inséré entre les griffes 44a et 44b dans les rainures 45, de sorte que l'évidement 43 de l'aimant se trouve dirigé vers l'intérieur du rotor. En outre, il est inséré en sorte que les pôles magnétiques nord et sud de l'aimant soient en contact avec les griffes 44a et 44b de même polarité magnétique. Par exemple, si la griffe 44a correspond à un pôle nord, la face de l'aimant 41 en contact avec la griffe est également un pôle nord.

Ainsi, aucun flux magnétique ne peut transiter entre les deux griffes 44a et 44b sans passer par le stator 46. Dans ce mode de réalisation, dans une région médiane de l'aimant, contrairement aux aimants interpolaires connus dans l'état de l'art, il n'y a pas de volume inutilisé pour le contrer les fuites. Ainsi, on garde les mêmes fonctions, en retirant une masse d'aimant inutile qui pénaliserait la masse du rotor, son coût et sa tenue mécanique. En effet, l'élément magnétique 42 et la large surface de contact offerte entre l'aimant 41 et les griffes 44a et 44b permettent une meilleure tenue de l'ensemble magnétique 40 dans les rainures 45. Cela évite aux ensembles magnétiques 40 de s'échapper par centrifugation lors de la rotation du rotor.

Sur la figure 5, peut voir un exemple utile à la compréhension de l'invention d'ensemble magnétique. Dans cet exemple, l'ensemble magnétique est composé d'un seul aimant 51.

L'aimant 51 présente deux évidements 52, chacun sur l'une de deux faces opposées. L'aimant représenté sur la figure 5 a ses deux évidements identiques. Cependant, il est possible de réaliser des évidements de natures différentes. Par exemple, il est possible d'effectuer un évidement de grandes dimensions pour celui regardant vers l'intérieur du rotor, et plusieurs évidements de petites dimensions pour celui regardant vers l'extérieur. On peut également réaliser un évidement elliptique et un autre triangulaire.

Cela permet de réduire encore la masse de l'aimant.

Dans cet exemple, les différents éléments composant l'ensemble magnétique sont de géométrie simple. Ils sont donc faciles à réaliser.

Dans un deuxième exemple utile à la compréhension de l'invention présenté à la figure 6, l'ensemble magnétique 60 est composé à la fois d'un aimant 61, et d'un élément magnétique 62.

L'aimant, dans un plan de coupe radial, a un profil de la forme de la lettre U. Ce U est formé de 3 segments rectilignes, les segments radiaux 63 et 64 sont sensiblement perpendiculaires au segment longitudinal 65.

L'élément magnétique 62 est en forme de parallélépipède, ses dimensions sont telles qu'il peut être inséré aisément dans le creux du U.

L'ensemble magnétique 60, a donc globalement la forme d'un parallélépipède, et peut alors être inséré facilement entre les rainures. L'ensemble magnétique présente aux griffes des faces constituées uniquement d'aimant, ce qui améliore sa fonction de limitation des fuites magnétiques.

Dans un autre exemple utile à la compréhension de l'invention, comme représenté sur la figure 7, l'aimant 60a peut avoir la forme de la lettre O

L'aimant peut être réalisé en deux parties, par exemple avec deux aimants accolés par leurs extrémités ayant chacun un profil en forme de U.

L'élément magnétique 62 est inséré au milieu du O.

Dans cet exemple, la répartition des lignes de champ magnétique issues de l'aimant sont plus équilibrées. De la même manière, la masse de l'ensemble magnétique est mieux répartie.

Dans le mode de réalisation selon l'invention de l'ensemble magnétique de la figure 8, l'ensemble magnétique 80 est composé à la fois de deux aimants 81, 82 et de deux éléments de matière magnétiques 83 et 84.

Dans un plan de coupe radial, la section de l'ensemble magnétique 80 comporte une succession alternée de couches radiales d'aimant et de matière magnétique.

Ainsi sur la figure 8, selon une direction radiale, on trouve successivement un aimant 82, suivi d'un élément de matière magnétique 84, suivi d'un autre aimant 81, suivi d'un dernier élément de matière magnétique 83.

Les aimants 81 et 82 sont de forme globalement parallélépipédique, et les éléments de matière magnétique 83, 84 sont des lames fines.

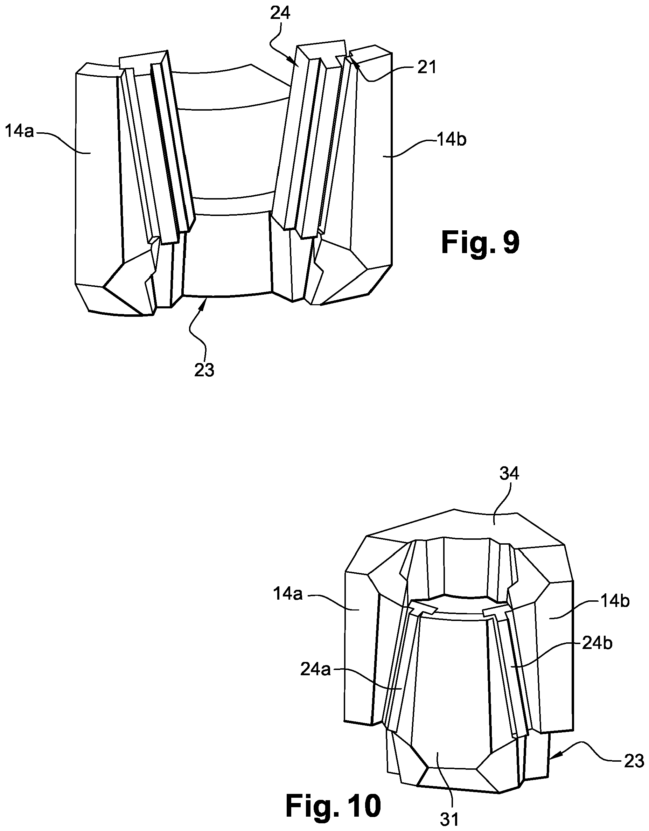

Sur la figure 9, on peut voir les rainures (ou épaulements) axiales 21 réalisées chacune sur la face latérale des griffes 14 du rotor. Ces griffes appartiennent à une même roue polaire 23. Un ensemble magnétique 24 est inséré dans ces rainures (ou épaulement) de sorte à être en contact, à la fois avec une griffe 14 d'une roue polaire, et avec une autre griffe imbriquée d'une autre roue polaire 34.

Sur la figure 10, on peut voir une griffe 14 d'une roue polaire 23, du rotor, imbriquée entre deux griffes 14a, 14b d'une autre roue polaire 34. Des ensembles magnétiques 24a, 24b sont insérés dans les espaces interpolaires.

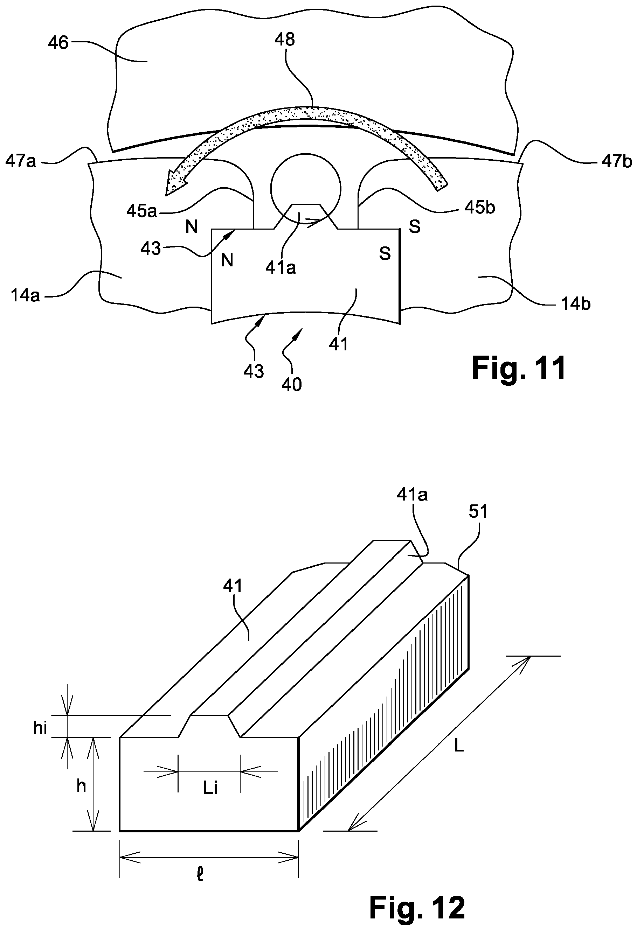

Dans un exemple utile à la compréhension de l'invention présenté à la figure 11, l'ensemble magnétique 40 est composé d'un seul aimant 41. L'aimant porte sur une face une saillie 41a s'étendant radialement vers l'extérieur du rotor, c'est-à-dire dans la direction opposée à l'axe.

L'ensemble magnétique est inséré entre les griffes 14a et 14b dans les rainures 21, de sorte que la saillie 41a se positionne entre les rainures 45a et 45b des griffes 14a et 14b. La saillie 41a ne dépasse pas le niveau radial de la face externe 47a, 47b des griffes polaires 14. Il est inséré aussi en sorte que les pôles magnétiques nord et sud de l'aimant soient en contact avec les griffes 14a et 14b de même polarité magnétique. Par exemple, si la griffe 14a correspond à un pôle nord, la face de l'aimant 41 en contact avec la griffe est également un pôle nord.

Ainsi, lorsque qu'une ligne de flux magnétique 48 s'échappe d'une rainure 45b vers la rainure 45a, la saillie 41a, par aimantation agit de sorte à écarter le chemin de fuite de la ligne de flux 48 jusqu'à le faire passer par le stator 46. Ce flux 48, qui serait perdu sans la présence de la saillie 41a, peut ainsi participer au fonctionnement de la machine électrique.

Un aimant 41, utilisable dans cet exemple est représenté, dans la figure 12 avec ses grandeurs caractéristiques.

Il s'agit d'un aimant qui est de manière préférentielle en matière terres rares. Par exemple, il peut être obtenu par moulage ou encore par façonnage d'un bloc de base. L'aimant 41 a une base sensiblement en forme de parallélépipède de longueur axiale L, de largeur mesurée de façon circonférentielle l, et de hauteur radiale h. Cette hauteur radiale h n'est pas la hauteur de l'aimant, puisque l'aimant 41 porte, sur une de ses faces de dimensions l et L une saillie 41a s'étendant radialement vers l'extérieur du rotor.

Ici, la saillie 41a est centrée sur une face de dimensions l et L. Cependant, cette position peut être différente. Elle peut être excentrée.

La saillie 41a a une largeur mesurée de façon circonférentielle li et une hauteur radiale hi. Comme elle est destinée à se trouver entre les rainures 45 des griffes, elle a des dimensions qui sont en accord avec les dimensions de ces rainures 45, et avec notamment la distance mesurée de façon circonférentielle entre ces rainures. Idéalement, sa largeur hi est telle qu'elle atteint ou avoisine le niveau radial de la face externe 47a, 47b des griffes, sans toutefois le dépasser afin de préserver l'entrefer.

En particulier, on veillera à choisir une hauteur radiale de la saillie 41a qui permette d'éviter qu'elle entre en contact avec le stator 46.

La saillie 41a peut avoir un profil radial semi-circulaire, semi-elliptique, triangulaire ou encore avoir un autre profil. Dans l'exemple utile à la compréhension de l'invention présenté à la figure 12, la saillie a un profil trapézoïdal.

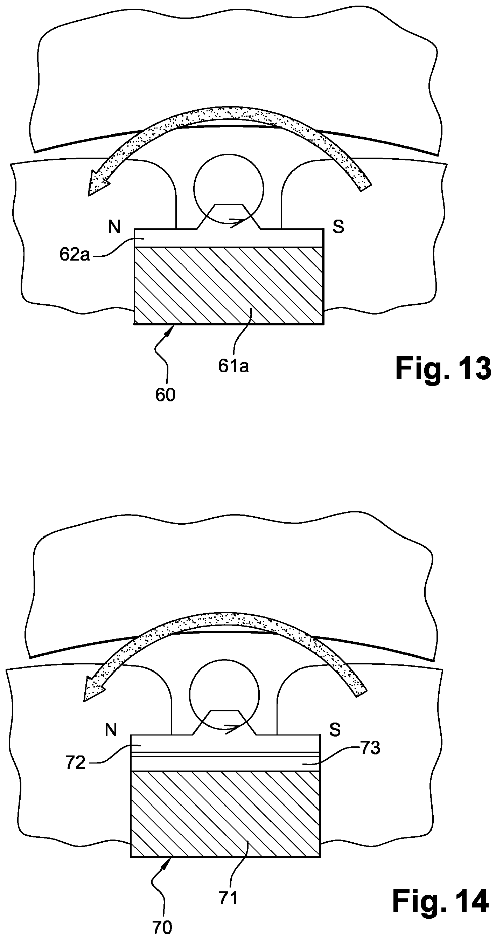

Dans un autre exemple utile à la compréhension de l'invention, on peut prévoir un ensemble magnétique 60 comportant deux aimants 61a, 62a, comme cela est représenté sur la figure 13.

L'aimant 61a a globalement la forme d'un parallélépipède. L'aimant 62a, quant à lui, est semblable à celui décrit dans la figure 12.

Les dimensions des aimants 61a, 62a sont choisies de sorte à ce qu'ils soient superposables. De plus, des moyens de fixation, comme par exemple de la colle, sont prévus pour les maintenir en contact.

L'aimant 61a, de par sa forme géométrique simple, est plus facile à réaliser. De plus, c'est cet aimant qui permet de contrer la plus grande partie du flux magnétique qui tente de passer d'une griffe à l'autre sans passer par le stator. Par conséquent, on réalise cet aimant dans un matériau efficace pour cette utilisation. Par exemple, l'aimant 61a est en terres rares.

L'aimant 62a a une forme géométrique plus complexe que celle de l'aimant 61a. Ainsi, sa réalisation peut engendrer des pertes de matière. Afin de limiter le coût de ces pertes, on peut réaliser l'aimant 62a en ferrites.

De la même manière, est possible d'adapter le choix de matériau pour les deux aimants selon les contraintes mécaniques qu'ils subiront lors de leur fabrication, ou de leur utilisation.

Dans un dernier exemple utile à la compréhension de l'invention, on peut prévoir un ensemble magnétique 70 comportant deux aimants 71, 72 ainsi qu'élément magnétique 73. Un tel ensemble est représenté sur la figure 14.

L'élément magnétique 73 est en forme de lame de faible épaisseur radiale. L'élément magnétique 73 est, par exemple, en acier. Son épaisseur radiale est assez petite pour qu'il soit saturé en flux magnétique par les aimants 71,72. Ainsi, on évite de court-circuiter les aimants.

Les aimants sont maintenus à l'élément magnétique par aimantation. On peut prévoir des moyens de fixation additionnels comme de la colle.

Dans tous les modes de réalisation de l'ensemble magnétique selon l'invention, la face en regard de l'extérieur du rotor peut présenter des stries. Ces stries peuvent être appliquées à toutes les formes de l'ensemble magnétique présentant une face en regard de l'extérieur du rotor. Ces stries améliorent le rendement de l'alternateur en réduisant les pertes par courant de Foucault qui se développent sur la surface des ensembles magnétiques.

Les aimants ainsi que les éléments de matière magnétique ont les mêmes dimensions circonférentielles et longitudinales. Cependant, la hauteur radiale des éléments magnétiques est assez faible par rapport à la hauteur radiale des aimants. Ainsi, les éléments de matière magnétique sont facilement saturés par les lignes de champ magnétique issues des aimants.

Le montage de l'ensemble dans les rainures pourra être facilité en arrondissant une ses des extrémités en regard de l'extérieur du rotor. L'ensemble magnétique peut également être arrondi sur sa partie en regard de l'intérieur du rotor. Cet arrondi peut être réalisé quelque soit la forme de l'ensemble magnétique. Ainsi, l'insertion des ensembles magnétiques pourra être faite de façon automatisée. Au lieu de les arrondir, on peut biseauter les extrémités.

Nous allons maintenant décrire le montage des ensembles dans les zones interpolaires des griffes de l'alternateur ou de l'alterno-démarreur.

On réalise un usinage des griffes dans la zone interpolaire par une fraise classique afin de réaliser une rainure de chaque coté de la zone interpolaire.

Une réalisation peut consister à monter les aimants non aimantés avec l'élément magnétique pour constituer l'ensemble magnétique, et ensuite aimanter les aimants. Cette dernière solution présente l'avantage de manipuler des éléments magnétiques non aimantés pendant l'assemblage, ainsi on s'affranchit des contraintes liées aux matériaux aimantés.

Ensuite, on insère l'ensemble entre les rainures. Cette insertion peut plus facilement être réalisée de façon automatique si un des bouts de l'ensemble est arrondi ou biseauté.

Bien entendu, la présente invention ne se limite pas aux formes de réalisation décrites ci-avant à titre d'exemple ; elle s'étend à d'autres variantes que l'homme de l'art pourra envisager dans le cadre des revendications ci-après.

A la lecture de la présente description, on comprendra que de nombreuses réalisations de l'invention sont possibles. Par exemple, il est possible de réaliser un ensemble magnétique consistant en un empilage radial de couches d'aimant et de matière magnétique, tout en utilisant un aimant avec un évidement, ou en faisant varier les formes et les dimensions de la saillie.

De plus, pour les profils d'évidements, il est possible de réaliser des profils courbes ou bien segmentés. A cet effet on notera que de nombreuses formes d'aimants en polyèdres et en non polyèdres sont possibles. Notamment les formes qui présentent un profil concave dans le plan de coupe radial.

Il est également possible d'utiliser trois aimants ou même encore plus. Il est également possible d'utiliser trois éléments de matière magnétique ou encore plus.

Un mode réalisation de la présente invention, peut également consister à réaliser un ensemble magnétique avec un évidement réalisé par combinaison de formes d'aimant particulières, sans utiliser d'aimants avec évidement.

## Revendications

1. Rotor (10) de machine électrique tournante, agencé de manière à pouvoir entrer en rotation autour d'un axe, et autour duquel peut être agencé un stator, ledit rotor comportant :
deux roues polaires (12a, 12b) ayant chacune une série de griffes polaires (14) s'étendant suivant une direction axiale et ayant une section dans un plan perpendiculaire à l'axe qui est sensiblement trapézoïdale, ces griffes polaires s'étendant depuis une extrémité radiale externe de la dite roue polaire (12a), en direction de l'autre roue polaire (12b), lesdites roues polaires étant agencées de manière que chaque griffe (14) d'une roue polaire est située dans l'espace interpolaire existant entre deux griffes polaires consécutives de l'autre roue polaire ; et
des ensembles magnétiques (40) respectivement agencés dans au moins un espace interpolaire et qui comportent chacun au moins un aimant (41),
**caractérisé en ce que** l'ensemble magnétique comporte une succession de plusieurs couches d'aimant et de plusieurs couches de matière magnétique alternées, superposées selon une direction radiale.

2. Rotor de machine électrique tournante selon la revendication précédente **caractérisé en ce que** l'aimant présente au moins un évidement s'étendant selon une direction axiale.

3. Rotor de machine électrique tournante selon une des revendications précédentes, **caractérisé en ce que** l'ensemble magnétique (20, 40, 60, 70) comporte une saillie (42) qui s'étend radialement dans ledit espace interpolaire au-delà de ladite rainure vers une extrémité radiale externe du rotor sans dépasser le niveau radial de la face externe (47a, 47b) des griffes polaires (14).

4. Rotor de machine électrique tournante selon la revendication précédente, **caractérisé en ce que** l'ensemble magnétique a une largeur circonférentielle comprise entre 18 et 22 fois la distance radiale entre une extrémité externe des griffes du rotor et une extrémité interne du stator.

5. Rotor de machine électrique tournante selon l'une des revendications précédentes, **caractérisé en ce que** l'aimant est en matière terres rares.

6. Rotor de machine électrique tournante selon l'une des revendications précédentes, **caractérisé en ce que** l'aimant est en matière ferrites.

7. Rotor de machine électrique tournante selon une des revendications précédentes, **caractérisé en ce que** la matière de l'élément de matière magnétique est de l'acier.

8. Rotor de machine électrique tournante selon l'une des revendications précédentes, **caractérisé en ce qu'**au moins un élément de matière magnétique est une lame de faible épaisseur radiale.

9. Rotor de machine électrique tournante selon l'une des revendications précédentes **caractérisé en ce que** l'aimant présente un premier évidement s'étendant selon une direction axiale et dirigé radialement vers l'intérieur du rotor.

10. Rotor de machine électrique tournante selon la revendication précédente **caractérisé en ce que** l'aimant présente un deuxième évidement s'étendant selon une longueur axiale et dirigé radialement vers l'extérieur du rotor.

11. Rotor de machine électrique tournante selon l'une des revendications précédentes **caractérisé en ce que** l'ensemble magnétique (73) comporte deux aimants de matières différentes (61, 62, 71, 72).

12. Rotor de machine électrique tournante selon la revendication 3 et une des revendications précédentes **caractérisé en ce qu'**un premier aimant (62, 72) portant la saillie (42) est en ferrites, et un deuxième aimant (61, 71) est en terres rares.

13. Alternateur comprenant un rotor selon l'une quelconque des revendications précédentes.

14. Alterno-démarreur comprenant un rotor selon l'une quelconque des revendications 1 à 12.

## Patentansprüche

1. Rotor (10) einer elektrischen Rotationsmaschine, welcher so gestaltet ist, dass er eine Rotation um eine Achse ausführen kann, und um den herum ein Stator angeordnet werden kann, wobei der Rotor aufweist:
zwei Polräder (12a, 12b), die jeweils eine Reihe von Klauenpolen (14) aufweisen, die sich in einer axialen Richtung erstrecken und einen Querschnitt in einer zur Achse senkrechten Ebene aufweisen, welcher im Wesentlichen trapezförmig ist, wobei sich diese Klauenpole von einem äußeren radialen Ende des Polrades (12a) aus in Richtung des anderen Polrades (12b) erstrecken, wobei die Polräder derart angeordnet sind, dass sich jede Klaue (14) eines Polrades in dem Polzwischenraum befindet, der zwischen zwei aufeinander folgenden Klauenpolen des anderen Polrades vorhanden ist; und
magnetische Anordnungen (40), die jeweils in wenigstens einem Polzwischenraum angeordnet sind und die jeweils wenigstens einen Magneten (41) aufweisen,
**dadurch gekennzeichnet, dass** die magnetische Anordnung eine Folge von sich abwechselnden mehreren Magnetschichten und mehreren Schichten aus magnetischem Material, die in einer radialen Richtung übereinanderliegen, aufweist.

2. Rotor einer elektrischen Rotationsmaschine nach dem vorhergehenden Anspruch, **dadurch gekennzeichnet, dass** der Magnet wenigstens eine Aussparung aufweist, die sich in einer axialen Richtung erstreckt.

3. Rotor einer elektrischen Rotationsmaschine nach einem der vorhergehenden Ansprüche, **dadurch gekennzeichnet, dass** die magnetische Anordnung (20, 40, 60, 70) einen Vorsprung (42) aufweist, welcher sich radial im Polzwischenraum über die Rille hinaus in Richtung eines äußeren radialen Endes des Rotors erstreckt, ohne über die radiale Höhe der äußeren Seite (47a, 47b) der Klauenpole (14) hinauszuragen.

4. Rotor einer elektrischen Rotationsmaschine nach dem vorhergehenden Anspruch, **dadurch gekennzeichnet, dass** die magnetische Anordnung eine Breite in Umfangsrichtung aufweist, die zwischen dem 18- und 22-Fachen des radialen Abstands zwischen einem äußeren Ende der Klauen des Rotors und einem inneren Ende des Stators liegt.

5. Rotor einer elektrischen Rotationsmaschine nach einem der vorhergehenden Ansprüche, **dadurch gekennzeichnet, dass** der Magnet aus Seltenerdmaterial besteht.

6. Rotor einer elektrischen Rotationsmaschine nach einem der vorhergehenden Ansprüche, **dadurch gekennzeichnet, dass** der Magnet aus Ferritmaterial besteht.

7. Rotor einer elektrischen Rotationsmaschine nach einem der vorhergehenden Ansprüche, **dadurch gekennzeichnet, dass** das Material des Elements aus magnetischem Material Stahl ist.

8. Rotor einer elektrischen Rotationsmaschine nach einem der vorhergehenden Ansprüche, **dadurch gekennzeichnet, dass** wenigstens ein Element aus magnetischem Material eine Platte von geringer radialer Dicke ist.

9. Rotor einer elektrischen Rotationsmaschine nach einem der vorhergehenden Ansprüche, **dadurch gekennzeichnet, dass** der Magnet eine erste Aussparung aufweist, die sich in einer axialen Richtung erstreckt und radial zum Inneren des Rotors hin gerichtet ist.

10. Rotor einer elektrischen Rotationsmaschine nach dem vorhergehenden Anspruch, **dadurch gekennzeichnet, dass** der Magnet eine zweite Aussparung aufweist, die sich entlang einer axialen Länge erstreckt und radial zur Außenseite des Rotors hin gerichtet ist.

11. Rotor einer elektrischen Rotationsmaschine nach einem der vorhergehenden Ansprüche, **dadurch gekennzeichnet, dass** die magnetische Anordnung (73) zwei Magnete aus unterschiedlichen Materialien (61, 62, 71, 72) aufweist.

12. Rotor einer elektrischen Rotationsmaschine nach Anspruch 3 und einem der vorhergehenden Ansprüche, **dadurch gekennzeichnet, dass** ein erster Magnet (62, 72), der den Vorsprung (42) trägt, aus Ferriten besteht und ein zweiter Magnet (61, 71) aus Seltenerdmaterial besteht.

13. Wechselstromgenerator, welcher einen Rotor nach einem der vorhergehenden Ansprüche umfasst.

14. Startergenerator, welcher einen Rotor nach einem der Ansprüche 1 bis 12 umfasst.

## Claims

1. Rotor (10) for rotary electric machine, arranged so as to be able to rotate about an axis, and around which it is possible to arrange a stator, said rotor comprising:
two pole wheels (12a, 12b), each having a series of pole claws (14) that extend in an axial direction and have an essentially trapezoidal cross section in a plane perpendicular to the axis, these pole claws extending from an outer radial end of said pole wheel (12a), towards the other pole wheel (12b), said pole wheels being arranged such that each claw (14) of one pole wheel is located in the inter-pole space that exists between two consecutive pole claws of the other pole wheel; and
magnetic assemblies (40) which are respectively arranged in at least one inter-pole space and which each comprise at least one magnet (41),
**characterized in that** the magnetic assembly comprises a succession of multiple magnetic layers and multiple layers of magnetic material in alternation, superposed in a radial direction.

2. Rotor for rotary electric machine according to the preceding claim, **characterized in that** the magnet has at least one cutout extending in an axial direction.

3. Rotor for rotary electric machine according to either of the preceding claims, **characterized in that** the magnetic assembly (20, 40, 60, 70) comprises a projection (42) that extends radially into said inter-pole space beyond said groove towards an outer radial end of the rotor without extending beyond the radial level of the outer face (47a, 47b) of the pole claws (14).

4. Rotor for rotary electric machine according to the preceding claim, **characterized in that** the magnetic assembly has a circumferential width of between 18 and 22 times the radial distance between an outer end of the claws of the rotor and an inner end of the stator.

5. Rotor for rotary electric machine according to one of the preceding claims, **characterized in that** the magnet is made of rare earth material.

6. Rotor for rotary electric machine according to one of the preceding claims, **characterized in that** the magnet is made of ferrite material.

7. Rotor for rotary electric machine according to one of the preceding claims, **characterized in that** the material of the element made of magnetic material is steel.

8. Rotor for rotary electric machine according to one of the preceding claims, **characterized in that** at least one element of magnetic material is a lamina of small radial thickness.

9. Rotor for rotary electric machine according to one of the preceding claims, **characterized in that** the magnet has a first cutout extending in an axial direction and oriented radially towards the interior of the rotor.

10. Rotor for rotary electric machine according to the preceding claim, **characterized in that** the magnet has a second cutout extending in the direction of an axial length and oriented radially towards the exterior of the rotor.

11. Rotor for rotary electric machine according to one of the preceding claims, **characterized in that** the magnetic assembly (73) comprises two magnets made of different materials (61, 62, 71, 72).

12. Rotor for rotary electric machine according to Claim 3 and one of the preceding claims, **characterized in that** a first magnet (62, 72) bearing the projection (42) is made of ferrites and a second magnet (61, 71) is made of rare earths.

13. Alternator comprising a rotor according to any one of the preceding claims.

14. Alternator-starter comprising a rotor according to any one of Claims 1 to 12.
